## Europäisches Patentamt

## European Patent Office

## Office européen des brevets

(19)

(11) Veröffentlichungsnummer: **0 046 254**
**B1**

(12) **EUROPÄISCHE PATENTSCHRIFT**

(45) Veröffentlichungstag der Patentschrift:
**14.12.83**

(21) Anmeldenummer: **81106219.9**

(22) Anmeldetag: **08.08.81**

(51) Int. Cl.³: **G 03 B 19/18,** G 03 B 1/48,
G 03 B 17/24

(54) **Kamera mit einer Vorrichtung zum Aufbelichten einer Marke auf einen Filmrand.**

(30) Priorität: **14.08.80 DE 3030874**

(43) Veröffentlichungstag der Anmeldung:
**24.02.82 Patentblatt 82/8**

(45) Bekanntmachung des Hinweises auf die Patenterteilung:
**14.12.83 Patentblatt 83/50**

(84) Benannte Vertragsstaaten:
**AT CH FR GB LI**

(56) Entgegenhaltungen:
**DE - A - 2 135 182**
**DE - A - 2 135 778**
**DE - A - 2 232 186**
**DE - A - 2 746 036**
**US - A - 3 263 555**

(73) Patentinhaber: **AGFA-GEVAERT Aktiengesellschaft,
D-5090 Leverkusen 1 (DE)**

(72) Erfinder: **Wilsch, Herbert, Alfred-Lingg-Strasse 2,
D-8025 Unterhaching (DE)**
Erfinder: **Zanner, Johann, Albert-Schweitzer-Strasse 1a,
D-8025 Unterhaching (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Kamera mit einer Vorrichtung zum Aufbelichten einer Marke auf einen Filmrand

Die Erfindung betrifft eine Kamera mit einer Filmtransportvorrichtung zum schrittweisen Vorbeitransportieren eines einseitig perforierten lichtempfindlichen Filmes an einem Bildfenster und mit einer Vorrichtung zum Aufbelichten einer Marke auf einen Rand des Filmes.

Eine solche Kamera ist beispielsweise aus der DE-OS Nr. 2746036 bekannt. Die Marken dienen zum Kennzeichnen von im Stillstand wiederzugebenden Einzelbildern. Die Vorrichtung zum Aufbringen der Marken besteht u.a. aus einer Belichtungsstation, die in Filmlaufrichtung gesehen nach dem Bildfenster auf der Perforationsseite des Filmes liegt. Die Marken sind gegenüber dem zugehörigen Bild auf dem Film vorversetzt.

Wie sich gezeigt hat, müssen bei der Konstruktion einer entsprechenden Kamera unter Berücksichtigung der bei Belichtung und Wiedergabe auftretenden Probleme verschiedene Aufgaben gelöst werden.

Eine besondere Schwierigkeit besteht darin, dass die Markiervorrichtung nicht verschmutzen darf. Schmutz kann in der Kamera beispielsweise durch den Greifer oder durch den von den Filmpositioniermitteln bewirkten Filmabrieb entstehen. Ferner soll die Marke selbst möglichst gross und sauber begrenzt sein, damit sie von entsprechenden Detektoren im Wiedergabegerät leicht und zuverlässig erkannt werden kann. Sie darf aber auf keinen Fall im Bild sichtbar sein oder dorthin überstrahlen.

Es ist ein wesentliches Merkmal zur Vermeidung von Verschmutzungen, dass die Belichtungsvorrichtung, speziell eine Öffnung mit dahinterliegender Lichtquelle, in Filmlaufrichtung vor Abrieb erzeugenden Teilen der Filmtransportvorrichtung angeordnet wird. Dort ist es auch möglich, die Filmführung so zu verbreiten, dass sie die Belichtungsöffnung in der Filmauflageebene umrandet und demnach scharfe Marken erzeugt werden.

Allerdings wird dadurch noch nicht vermieden, dass anderweitig herrührender Staub oder Schmutz die Belichtungsöffnung zusetzen könnte. Um eine Selbstreinigung durch den vorbeitransportierten Film zu gewährleisten, wird gemäss der Erfindung vorgeschlagen, dass die Aufbelichtungsvorrichtung eine in einer Auflagefläche für den nicht perforierten Filmrand befindliche Öffnung aufweist und dass der in Richtung Bildfenster weisende Rand die Öffnung tiefer liegt als die mit der Auflagefläche abschliessenden Ränder.

Besonders vorteilhaft ist es, wenn gemäss weiterer Ausbildung des Gegenstandes der Erfindung der tiefer liegende Rand der Öffnung keilförmig in einen ins Freie führenden Schmutzführungskanal abfällt. Dadurch können auch grössere Schmutzpartikel zuverlässig entfernt werden.

Ferner ist es zweckmässig, wenn sich der Schmutzführungskanal im Bereich der keilförmig abfallenden Fläche verengt. Das bietet die Möglichkeit, dass die Filmauflagekufe sich unmittelbar nach der Belichtungsöffnung wieder auf das Normalmass verbreitern kann und somit die gesamte Filmauflagefläche nur geringfügige Änderungen erfährt.

Weitere Einzelheiten der Erfindung ergeben sich aus der Beschreibung, in der im folgenden anhand der Zeichnung ein Ausführungsbeispiel erörtert wird. Es zeigen:

Fig. 1 eine Aufsicht auf erfindungsgemässe Teile einer Schmalfilmkamera,

Fig. 2 einen Schnitt durch die Anordung nach Fig. 1 gemäss der Schnittlinie II-II,

Fig. 3 eine Aufsicht auf ein erfindungsgemäss markiertes Filmstück, und

Fig. 4 eine vergrösserte perspektivische Darstellung eines Ausschnittes aus Fig. 1.

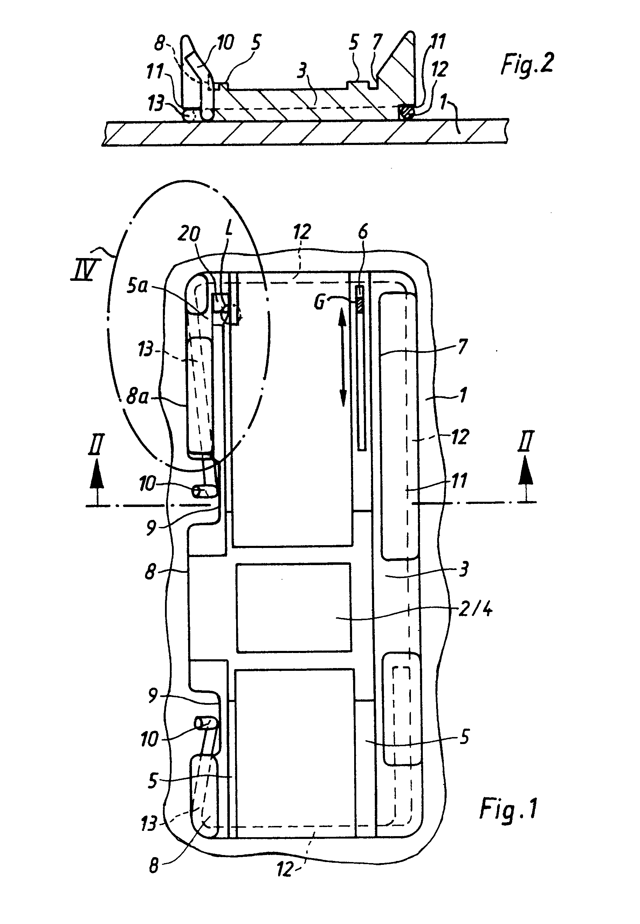

Von einer Schmallfilmkamera ist in den Fig. 1 und 2 die stirnseitige Trägerplatine 1 gezeigt. Sie weist einen Bildfensterausschnitt 2 auf und trägt die Filmbahnplatine 3, die ebenfalls einen Bildfensterausschnitt 4 hat. In Blickrichtung der Fig. 1 und 2 unterhalb der Trägerplatine 1 sind der nicht gezeigte Umlaufverschluss und Greifermechanismus sowie das Kameraobjektiv angeordnet.

Die Filmbahnplatine 3 weisst in Filmtransportrichtung zu beiden Seiten des Bildfensterausschnitts 2 vier als Filmauflageflächen dienende Kufen 5 auf, die genau gegenüber dem Objektiv gearbeitet und justiert sind und die eigentliche Filmbahn bilden. Ausserdem sind in der Filmbahnplatine 3 und in der Trägerplatte 1 deckungsgleiche Schlitze 6 zum Durchtritt des Filmtransportgreifers G vorgesehen. Der seitlichen Filmführung dienen seitliche Kufen 7, 8 und 8a, wobei die Kufen 8 und 8a auf der einen Längsseite zwei Unterbrechungen 9 aufweisen. Diese Unterbrechungen 9 dienen dem Eingriff zweier seitlicher Filmandruckfedern 10 und sind im wesentlichen symmetrisch zur Querschnittlinie des Bildfensterausschnitts 2, 4 angeordnet. Durch die seitlichen Filmandruckfedern 10 wird erreicht, dass der nicht gezeigte Film im Bildfenster in Anlage an den seitlichen Kufen 7 gehalten und somit genau ausgerichtet ist, da der Abstand der Kufen 7, 8 aus Gründen eines störungsfreien Filmtransports etwas grösser als die Filmbreite sein muss.

Zur Aufnahme von Filmandruckfedern 10 ist in der Filmbahnplatine 3 unterhalb der Filmbahn 5 eine umlaufende Nut 11 vorgesehen, die an der Seite der Unterbrechungen 9 erheblich tiefer ist als an den anderen drei Seiten der Filmbahnplatine 3.

Die Filmandruckfedern 10 werden durch einen Federdraht 12 gebildet, der so gebogen ist, dass er an der die durchgehende Kufe 7 ragenden Längsseite und den beiden Schmalseiten der Filmbahnplatine 3 gerade und straff in der Nut 11 liegt. An der die Unterbrechungen 9 ragenden Seite der Filmbahnplatine 3 liegen in den Unterbrechungen 9 die freien Schenkel 13 des Federdrahts 12. Die freien Schenkel 13 stehen an den Ecken der Filmbahnplatine 3 bis an den äusseren Rand der Nut 11 vor und sind dann abgeschrägt nach innen in die Unterbrechungen 9 hineingebogen und dabei vorgespannt. Die in den Unterbrechungen 9 und damit an der Filmkante anliegenden Enden 10 der Schenkel 13 sind senkrecht zur Filmbahn 5 hochgebogen und bilden somit die eigentlichen, auf die Filmkante einwirkenden seitlichen Aufdruckfedern.

Soweit bisher beschrieben, ist die Filmplatine aus DE-GM Nr. 78 19 727 bekannt.

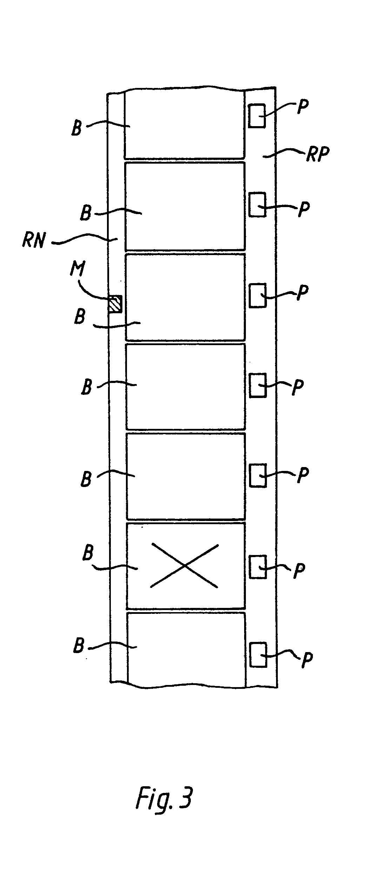

Zur Aufbringung einer Markierung ist die Filmauflagekufe 5 im oberen, dem Ende 6 des Bewegungsbereiches des Greifers G gegenüberliegenden Bereich 5a verbreitert und weist eine Öffnung 20 auf, die eine quadratische filmseitige Austrittsfläche hat. Hinter dieser ist eine Lichtquelle L angeordenet, die vorzugsweise aus einer Lumineszenzdiode besteht und in einem geeigneten Zeitpunkt während des Filmstillstandes Licht emittiert und somit wegen der quadratischen Austrittsfläche der Öffnung eine quadratische Marke M auf den Film aufbelichtet, die in Fig. 3 zu erkennen ist.

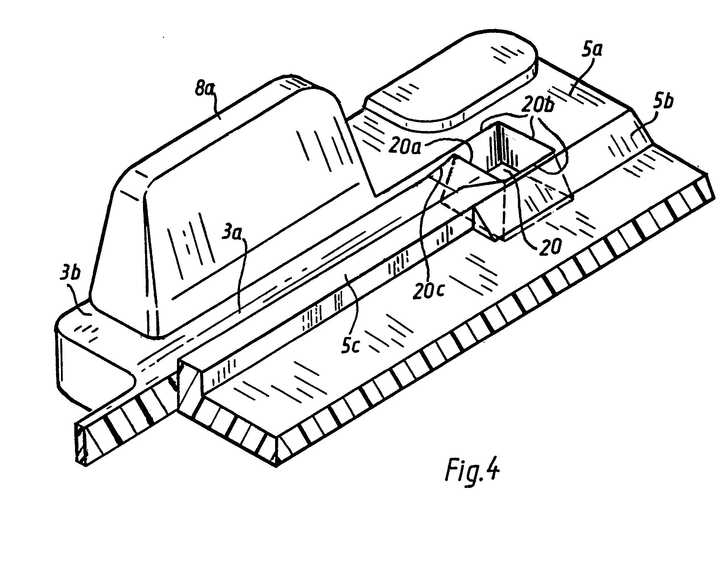

Wie anhand von Fig. 4 zu erkennen ist, liegt der zum Filmfenster hinweisende Rand 20a der Öffnung 20 unterhalb des Niveaus der Filmauflagefläche 5a und geht in eine keilförmig abfallende Fläche über, die in einen Schmutzkanal 3a mündet und über die Fläche 3b ins Freie führt. Ferner ist der Schmutzführungskanal 3a so eng, dass die Filmführungsfläche 5c die gewohnte Normalbreite aufweist.

Wenn der Film auf der Filmauflagefläche 5a, 5c entlangläuft, nimmt er eventuell in der Öffnung 20 sich ansetzende Schmutzpartikel mit und führt sie über den Kanal 3a ins Freie.

Die Verbreiterung der Filmauflagekufe 5 im Bereich 5a wirkt sich auf den Film nicht schädlich aus. Sie bringt aber eine bis auf die Filmauflagefläche reichende Berandung der Öffnung 20 mit sich, wodurch ein Überstrahlen der Belichtungsmarke M in den Bildbereich B hinein verhindert wird. Wegen dieser zuverlässigen Trennung von Marke und Bild kann die Marke, wie in Fig. 3 dargestellt, verhältnismässig breit sein, was zur Erhöhung der Erkennungssicherheit bei der Wiedergabe vorteilhaft ist.

Fig. 3 zeigt einen gemäss der Erfindung mit einer Marke M versehenen, einseitig perforierten Film mit einem Perforationsrand RP mit Perforationslöchern P, mit Einzelbildern B und einer Marke M auf dem nicht perforierten Rand RN. Das in der Bildbühne befindliche Bild ist mit einem X markiert. Wie an dieser Figur zu erkennen ist, befindet sich die Marke M gegenüber einem Perforationsloch P auf mittlerer Bildhöhe.

## Patentansprüche

1. Kamera mit einer Filmtransportvorrichtung zum schrittweise Vorbeitransportieren eines perforierten lichtempfindlichen Filmes an einem Bildfenster und mit einer Vorrichtung zum Aufbelichten einer Marke auf einen Rand des Filmes, dadurch gekennzeichnet, dass die Aufbelichtungsvorrichtung eine in einer Auflagefläche (5a) für den nicht perforierten Filmrand (RN) befindliche Öffnung (20) aufweist und dass der in Richtung Bildfenster (2/4) weisende Rand (20a) der Öffnung (20) tiefer liegt als die mit der Auflagefläche (5a) abschliessenden Ränder (20b).

2. Kamera nach Anspruch 1, dadurch gekennzeichnet, dass der tiefer liegende Rand (20a) der Öffnung (20) keilförmig in einen ins Freie führenden Schmutzführungskanal (3a, 3b) abfällt.

3. Kamera nach Anspruch 2, dadurch gekennzeichnet, dass sich der Schmutzführungskanal (3a) im Bereich der keilförmig abfallenden Fläche (20c) verengt.

## Claims

1. Camera having a film transport device for conveying a light-sensitive film that is perforated on one side step-by-step past an image gate and having a device for exposing a mark onto one edge of a film, characterized in that the exposure device has an aperture (20) in a supporting surface (5a) for the unperforated edge (RN) of the film, and in that the edge (20a) of the aperture (20) pointing in the direction of the image gate (2/4) lies lower than the edges (20b) terminating at the supporting surface (5a).

2. Camera according to claim 1, characterized in that the lower-lying edge (20a) of the aperture (20) tapers off in the form of a wedge into a dirt guide channel (3a, 3b) which leads into the open.

3. Camera according to claim 2, characterized in that the dirt guide channel (3a) narrows in the region of the surface (20c) tapering in the form of a wedge.

## Revendications

1. Caméra comportant un dispositif de transport du film servant à déplacer pas à pas un film photosensible perforé d'un côté, devant une fenêtre de cadrage et un dispositif pour l'exposition d'une marque sur un bord du film, caractérisée par le fait que le dispositif d'exposition comporte une ouverture (20) située dans une surface d'appui (5a) pour le bord non perforé (RN) du film, et que le bord (20a) de l'ouverture (20), tourné vers la fenêtre de cadrage (2/4), est plus bas que les bords (20b) se terminant au niveau de la surface d'appui (5a).

2. Caméra suivant la revendication 1, caractérisée par le fait que le bord le plus bas (20a) de l'ouverture (20) possède une forme cunéiforme descendant vers un canal (3a, 3b) de guidage de la saleté débouchant à l'air libre.

3. Caméra suivant la revendication 2, caractérisée par le fait que le canal (3a) de guidage de la saleté se rétrécit au niveau de la surface (20c) de forme cunéiforme descendante.

0 046 254

Fig.2

Fig.1

5

Fig. 3

Fig.4